# EUROPÄISCHE PATENTSCHRIFT

(11) **EP 1 707 911 B1**
(45) Veröffentlichungstag und Bekanntmachung des Hinweises auf die Patenterteilung: **24.08.2011**
(21) Anmeldenummer: 06005235.4
(22) Anmeldetag: 15.03.2006
(51) Int. Cl.: F28D 7/16, F28F 9/00, F28F 1/10

(54) **Wärmetauscher, beispielsweise Ladeluftkühler und Herstellungsverfahren**
Heat exchanger, for example charged-air cooler and manufacturing process.
Échangeur de chaleur, par exemple refroidisseur d'air de suralimentation et procédé de fabrication

(30) Priorität: 19.03.2005 DE 102005012761
(43) Veröffentlichungstag der Anmeldung: 04.10.2006
(73) Patentinhaber: Modine Manufacturing Company, Racine, Wisconsin 53403-2552 (US)
(72) Erfinder: Lamich, Bernhard, Dipl.-Ing., 73732 Esslingen (DE); Brost, Viktor, Dipl.-Ing., 72631 Aichtal (DE); Pedani, Marco, 30126 Lido di Venezia (IT); Ghidini, Alfredo, 26039 Vescovato (IT)
(74) Vertreter: Wolter, Klaus-Dietrich

(56) Entgegenhaltungen:
- EP-A- 1 296 108
- FR-A- 2 837 917
- US-A1- 2003 010 479

## Beschreibung

Die Erfindung betrifft einen Wärmeübertrager, beispielsweise einen Ladeluftkühler für ein Kraftfahrzeug, bestehend aus einer Vielzahl von Flachrohren, die in Sammelkästen münden und für ein gasförmiges Medium gedacht sind, und aus zwischen den Flachrohren angeordneten Strömungspfaden für ein flüssiges Medium, und mit einem die Flachrohre und die Strömungspfade umfassenden Gehäuse, sowie mit entsprechenden Ein - und Auslässen für die Flüssigkeit und für das Gas. Ferner betrifft die Erfindung ein Herstellungsverfahren für solche Wärmeübertrager.

Der Wärmeübertrager ist aus der DE 199 27 607 A1 oder aus der FR-A-2 837 917 bekannt. Der dortige Wärmeübertrager, insbesondere Ladeluftkühler, ist als Ganzmetallausführung mit angelöteten Sammelkästen konzipiert worden, was bei Ladeluftkühlern wegen der enormen Temperaturen der Ladeluft oft die bevorzugte Wahl darstellt. Jedoch sind solche Ladeluftkühler nur mit beträchtlichem Aufwand herstellbar, weil die Vorbereitung und Durchführung des Lötverfahrens aufwendig ist. Oft muss ein Vakuumlötverfahren anstelle des wesentlich günstigeren CAB - Lötverfahrens vorgesehen werden. Das Aufbringen des Flussmittels ist mittels Sprühverfahren nicht möglich, sodass auf umständlichere Tauchverfahren zurückgegriffen werden muss.

Ebenfalls als Ganzmetallkonstruktion wurde der aus DE 103 02 708A1 bekannte Ladeluftkühler ausgeführt. Das Gehäuse ist dort zweiteilig und besteht aus einem U-förmigen Teil, dessen eine offene Seite mittels eines Deckels verschlossen ist. Obwohl dort allgemein auf die Möglichkeit hingewiesen wurde, Kunststoffe zu verwenden, wurde offen gelassen, wie solche Ladeluftkühler hergestellt werden sollen, wenn Kunststoffe zum Einsatz kommen. Ansonsten gilt hier auch das, was bereits zum erstgenannten Dokument gesagt wurde.

Bei mit einem Kühlluftstrom beaufschlagte Wasser - oder Ladeluftkühler gehört es seit Jahrzehnten zum Stand der Technik, den Kühlerblock, bestehend aus Flachrohren, Rohrböden, Kühlrippen und Seitenteilen, zu löten und anschließend Sammelkästen aus Kunststoff an den Rohrböden mechanisch zu befestigen.

Die Aufgabe der Erfindung besteht darin, einen ausgesprochen kostengünstig herstellbaren mit Flüssigkeit beaufschlagten Ladeluftkühler und dessen Herstellungsverfahren anzugeben.

Die erfindungsgemäße Lösung geht bezüglich des Wärmeübertragers aus dem Patentanspruch 1 hervor.

Es ist vorgesehen, dass das Gehäuse aus zwei Seitenteilen und aus zwei Deckel besteht. Die Seitenteile sind mit dem Block aus Flachrohren verlötet. Die Verbindungen zwischen Deckel, Seitenteilen und Rohrböden sind Schweißverbindungen. In den Rohrböden stecken die Enden der Flachrohre. An den Deckeln befinden sich die Ein - und Auslässe für die Flüssigkeit. Die Sammelkästen sind mit den Rohrböden mechanisch verbunden. Obwohl die einzelnen Gestaltungsmerkmale scheinbar naheliegend sind, ist deren Kombination jedoch nicht naheliegend, denn es wird ein besonders kostengünstig herstellbarer Ladeluftkühler zur Verfügung gestellt, was unerwartet war, denn im Stand der Technik wurde bisher, nach Kenntnis der Anmelderin, ein anderer Weg beschritten. (siehe vorne) Der erfindungsgemäße Ladeluftkühler ist, bei Einsatz von Sammelkästen aus Kunststoff, für zahlreiche Einsatzfälle geeignet, nämlich für solche, wo moderate Ladelufttemperaturen bis ca. 160°C auftreten, was bei aufgeladenen Benzinmotoren oft der Fall ist. Darüber hinaus sind Bestrebungen im Gange, die Eigenschaften der Kunststoffe hinsichtlich noch höherer Temperaturen zu verbessern. Bei noch höheren Temperaturbereichen werden jedoch Sammelkästen aus Metall eingesetzt und mit den Rohrböden mechanisch verbunden. Obwohl das Gehäuse gemäß der Erfindung vierteilig, nicht zweiteilig, wie im Stand der Technik, ausgebildet ist, wurden die Herstellungskosten deutlich reduziert, auch deshalb, weil zwei der Gehäuseteile am Block verlötet werden und lediglich noch zwei Gehäuseteile, nämlich die beiden Deckel, anzuschweißen sind, wozu geeignete Schweißvorrichtungen zur Verfügung stehen. Der Block ist so ausgebildet, dass er mittels Sprühverfahren mit Flussmittel versehen werden kann und mittels dem wirtschaftlichen CAB - Verfahren hergestellt werden kann.

Das erfindungsgemäße Herstellungsverfahren sieht demnach vor, dass der Block aus Flachrohren mit Inneneinsätzen, Rohrböden, Seitenteilen und in den Strömungspfaden befindlichen Einsätzen mittels CAB - Lötverfahren gelötet wird, dass die Deckel mittels Schweißverfahren mit den Rohrböden und den Seitenteilen des gelöteten Blocks dicht verschweißt werden, und dass Sammelkästen mechanisch mit den Rohrböden dicht verbunden werden.

Der Block ist, wie bereits erwähnt, so ausgestaltet, dass das Flussmitel mittels Sprühverfahren aufgebracht werden kann. Das heißt, sämtliche Verbindungsstellen sind so ausgestaltet, dass das aufgesprühte Flussmittel dieselben in einem solchen ausreichenden Maße erreicht, dass eine erstklassige Qualität der Lötverbindungen mit dem CAB - Lötverfahren gewährleistet ist. "CAB" steht für "Controlled Atmosphere Brazing" und ist im Übrigen ein gut bekanntes Lötverfahren, welches hier nicht weiter zu erklären ist.

Es werden vorzugsweise mit einer Längsnaht geschweißte Flachrohre mit einem Inneneinsatz verwendet.

Weitere Merkmale ergeben sich aus den anderen Patentansprüchen und aus der nachfolgenden Beschreibung eines Ausführungsbeispiels.

Dazu wird auf die beiliegenden Zeichnungen verwiesen.

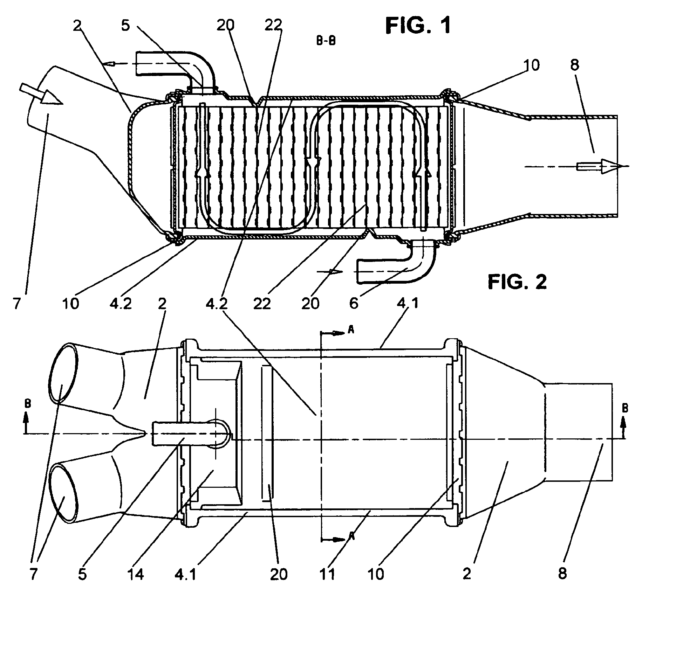

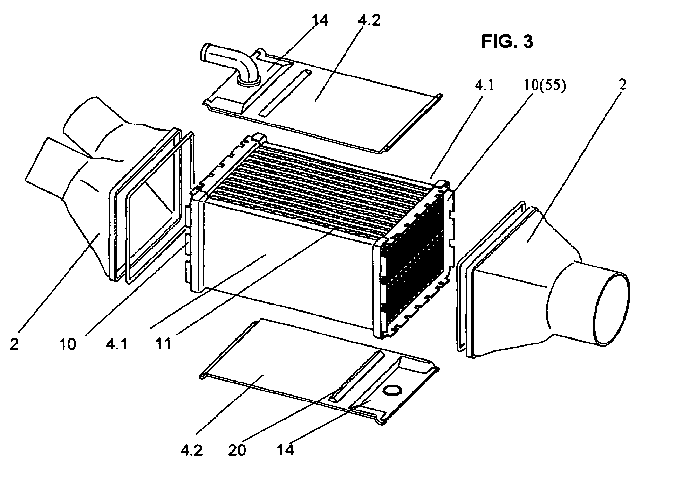

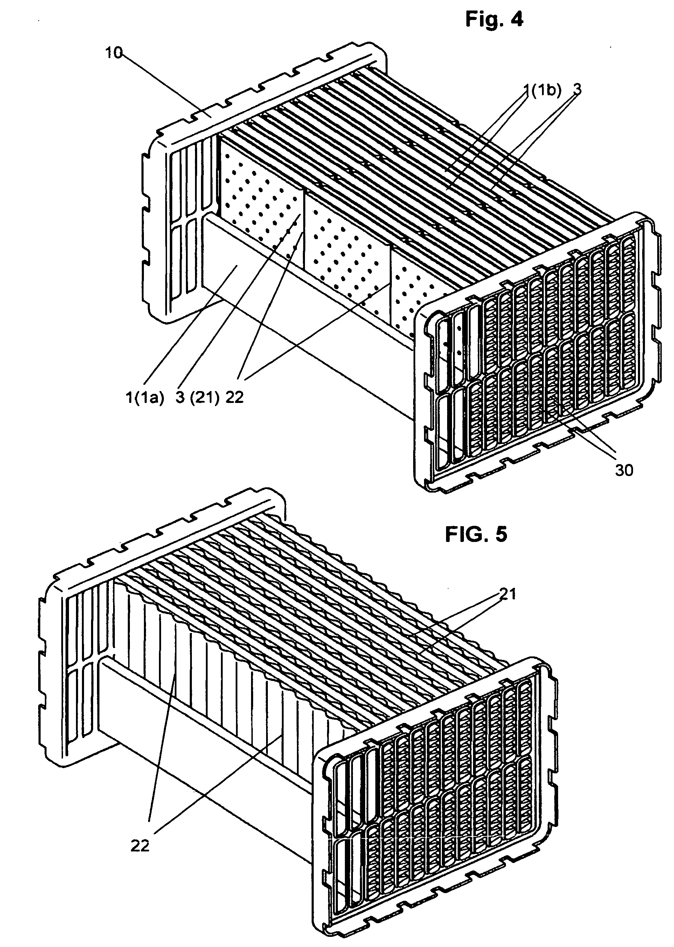

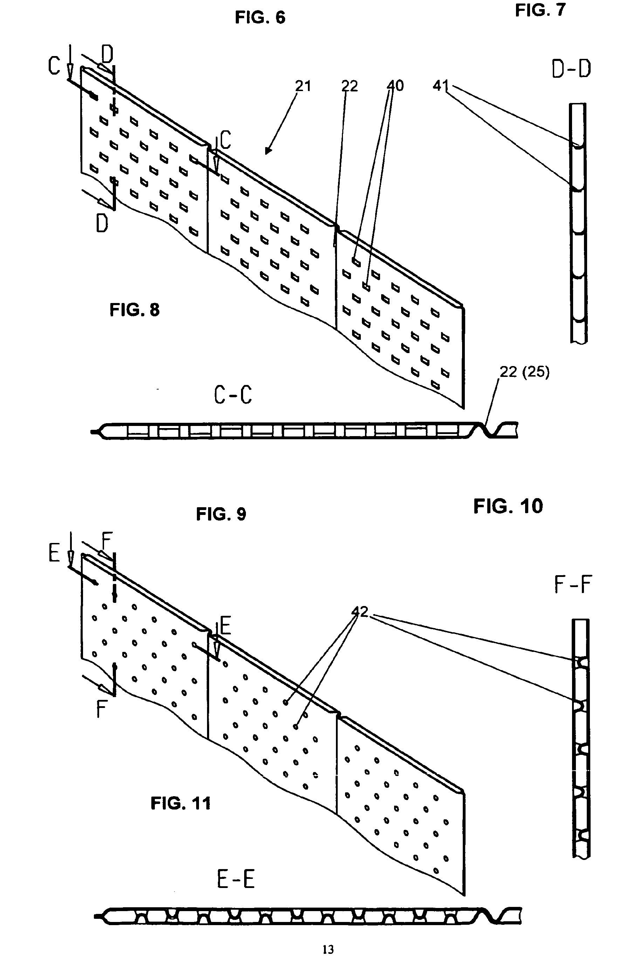

Die Fig. 1 zeigt den Schnitt B-B gemäß Fig. 2. Die Fig. 2 zeigt eine Draufsicht auf den Wärmeübertrager. Die Fig. 3 zeigt die Montage der Sammelkästen und der Deckel am gelöteten Block. Die Fig. 4 zeigt einen perspektivischen Blick auf den Wärmeübertrager ohne Gehäuse. Die Fig. 5 zeigt etwas Ähnliches wie die Fig.- 3, wobei andere Einsätze in den Strömungspfaden verwendet werden. Die Fig. 6 - 16 zeigen verschiedene Alternativen für Einsätze in den Strömungspfaden.

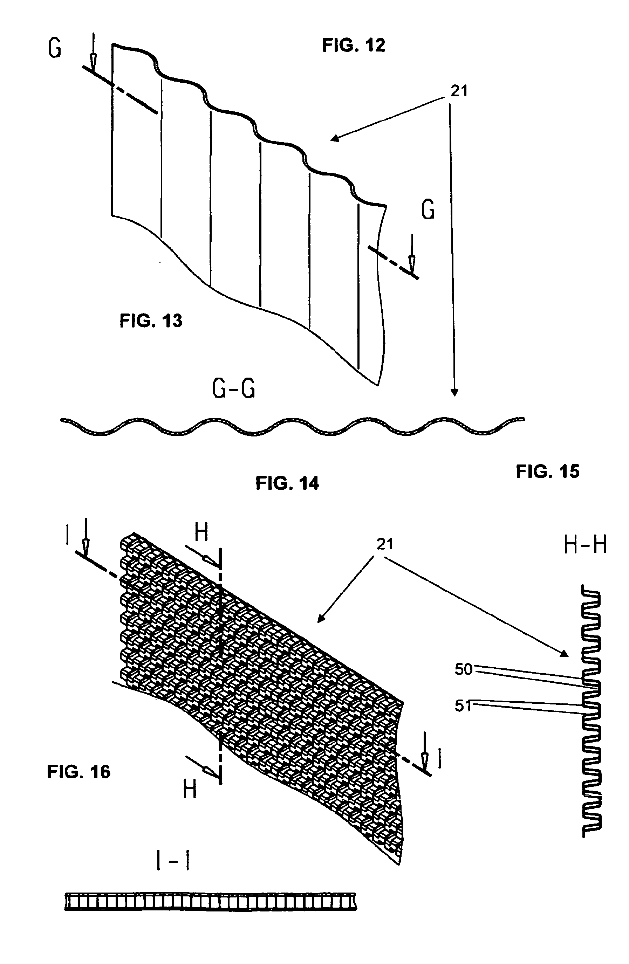

Der Ladeluftkühler wird aus zwei Reihen von Flachrohren 1 und Einsätzen 21 in den Strömungspfaden 3, die zwischen den Flachrohren 1 angeordnet sind, zusammengesetzt. An den Enden der Flachrohre 1 wird jeweils ein Rohrboden 10 aufgezogen. Dies ist anhand der Fig. 4 und 5 nachvollziehbar, wobei in der Fig. 4 jeweils aus zwei Blechen bestehende Einsätze 21 verwendet wurden, die in den Fig. 6 - 11 detailliert gezeigt sind und die später beschrieben werden. In der Fig. 5 wurden lediglich gewellte Bleche als Einsätze 21 verwendet, die in den Fig. 12 und 13 gezeigt sind. In den Flachrohren 1 befinden sich Inneneinsätze 30, die ebenfalls einfach als gewellte Bleche ausgebildet sind. Zu den in den Figuren 4 und 5 gezeigten Teilen werden noch die beiden Seitenteile 4.1 hinzugefügt, die in der Fig. 2 oder 3 als obere und untere Begrenzung des Blocks zu sehen sind. Die erwähnten Einzelteile sind zweckmäßig mit einer Lotschicht überzogen. Dieser bis hierher beschriebene Block wird zum CAB - Löten vorbereitet. Insbesondere wird er mittels Sprühverfahren mit dem entsprechenden Flussmittel versehen. Es hat sich dabei erwiesen, dass das Flussmittel auch in ausreichendem Umfang in die Flachrohre 1 hinein läuft, um die Verbindung mit den Inneneinsätzen 30 zu gewährleisten. Das Flussmittel wird auch per Sprühverfahren zwischen die Flachrohre 1 gebracht. Anschließend wird das CAB - Lötverfahren durchgeführt. Der entstandene gelötete Block ist im Zentrum der Fig. 3 zu sehen. Dann werden an diesen Block die Deckel 4.2 mittels eines elektrischen Schweißverfahrens und in zweckmäßiger Weise unter Zuhilfenahme einer nicht gezeigten Schweißvorrichtung an gegenüberliegenden Seiten des Blocks befestigt. Die Schweißverbindungen werden zwischen den Rändern des Deckels 4.2 und den angrenzenden Rändern des Rohrbodens 10 und auch zwischen den anderen Rändern des Deckels 4.2 und den Seitenteilen 4.1 hergestellt. Dichte Schweißverbindungen sind erforderlich, da die Flüssigkeit zwischen dem Deckel 4.2 und den angrenzenden Flachrohren 1 strömt. In der Fig. 3 ist erkennbar, dass die Enden der Seitenteile 4.1, die mit den Rohrböden 10 verbunden sind, abgekröpft sind, um die entsprechende Seite des Rohrbodens 10 von außen zu umfassen. Die Längsränder der Seitenteile 4.1 sind abgebogen worden und stellen einen geeigneten Anschlag zur Herstellung der Schweißverbindung mit den Längsrändern des Deckels 4.2 zur Verfügung. Eine entsprechende Abkröpfung findet sich auch an denjenigen Enden des Deckels 4.2, die mit den Rohrböden 10 verschweißt werden.

Wenn die Deckel 4.2 wie beschrieben verschweißt worden sind, werden die Sammelkästen 2 unter Zwischenfügung einer Dichtung mit den Rohrböden 10 mechanisch verbunden, wonach das Herstellungsverfahren abgeschlossen ist. Die mechanische Verbindung wird durch das Umbiegen von Laschen 55 auf den Rand des Sammeikastens 2 in bekannter Weise erledigt. In den Fig. 1 und 2 ist die mechanische Verbindung bereits vollzogen worden. In der Fig. 3 stehen die Laschen 55 noch senkrecht.

Am linken Kunststoff- Sammelkasten 2 sind zwei Einlässe 7 für die heiße Verdichter - oder Ladeluft vorgesehen und am rechten Kunststoff-Sammelkasten 2 entsprechend ein Auslass 8 für die gekühlte Ladeluft. Solche Sammelkästen 2 lassen sich aus Kunststoff besonders kostengünstig herstellen. Am unteren Deckel 4.2 befindet sich der Einlass 6 für die Kühlflüssigkeit, die am oberen Deckel 4.2 über den Auslass 5 den Ladeluftkühler verlässt, um in den entsprechenden Kreislauf zurück zu strömen.

Für bestimmte Anwendungsfälle ist eine mäanderartige Durchströmung des Wärmeübertragers auf der Seite der Flüssigkeit zweckmäßig und kann sehr einfach realisiert werden. Wie insbesondere aus der Fig. 1 entnommen werden kann, wird das dadurch erreicht, dass eine Sicke als Strömungsumlenkung 20 in die beiden Deckel 4.2 eingearbeitet wird, die sich quer über die Schmalseiten 1 b der Flachrohre 1 erstrecken. Auf der Höhe der Position der Strömungsumlenkung 20 wird durch die Ausbildung der Einsätze 21 eine Strömungstrennung 22 zur Verfügung gestellt, wodurch die mäanderartige Durchströmung geschaffen ist. In der Fig., 1 ist der Durchströmweg eingezeichnet worden. Die zwischen den Flachrohren 1 angeordneten Einsätze 21 können jeweils aus zwei Blechen bestehen, wie es in den Fig. 6 - 11 gezeigt ist. Als Strömungstrennung 22 besitzen die Bleche Quersicken oder ähnliche Verformungen und sind dort linienartig miteinander verbunden. Die zweiteiligen Einsätze 21 können mit Öffnungen 40 versehen werden, wobei davon abragende Laschen 41 nach innen abgebogen sind, die dann für Turbulenzen in der Flüssigkeit sorgen. Das ist in den Fig. 6 - 8 zu sehen. In den Fig. 9 - 11 sind nach innen gerichtete Noppen 42 eingeprägt worden, die demselben Zweck dienen.

Die Fig. 12 und 13 zeigen einen wellenförmigen Einsatz 21, der jeweils zwischen den Flachrohren 1 angeordnet wird. Die Strömungstrennung 22 wird dort durch die Verbindung der Wellenberge mit den Breitseiten 1a der Flachrohre 1 geschaffen. Es ist bei diesem Ausführungsbeispiel erkennbar, dass es sich hier nicht um eine wirkliche Trennung sondern lediglich um eine gewisse Lenkung der Flüssigkeit handelt, die aber ihren Zweck bereits erfüllt.

Die Fig. 14 - 16 zeigen weithin als Öllamellen bezeichnete Einsätze 21, weil diese häufig bei Ölkühlern zu finden sind. Gemäß einer Weiterbildung kommen solche Öllamellen bei dem Ladeluftkühler auf der Flüssigkeitsseite zwischen den Flachrohren 1 zur Anwendung. Die in der Fig. 14 eingezeichneten Schnitte I - I und H - H sind in den Fig. 15 bzw. 16 dargestellt und zeigen die an sich bekannte Ausbildung der Öllamellen. In solchen Öllamellen können die Wellen 50, beispielsweise in Fig. 14 entlang der Linien H - H oder I - I, ohne Schnitte bzw. Öffnungen 51 ausgebildet werden, um auch dort, falls gewünscht, die oben beschriebene Strömungstrennung 22 zu realisieren. (nicht gezeigt)

## Patentansprüche

1. Wärmeübertrager, beispielsweise Ladeluftkühler für ein Krafftahrzeug bestehend aus einer Vielzahl von Flachrohren (1), die in Sammelkästen (2) münden und für ein gasförmiges Medium gedacht sind und aus zwischen den Flachrohren (1) angeordneten Strömungspfaden (3) für ein flüssiges Medium, und mit einem die Flachrohre (1) und die Strömungspfade (3) umfassenden Gehäuse (4), sowie mit entsprechenden Ein - und Auslässen (5 - 8) für die Flüssigkeit und für das Gas, wobei
sich das Gehäuse (4) aus zwei Seitenteilen (4.1) und aus zwei Deckel (4.2) zusammensetzt und
die Seitenteile (4.1) mit einem Block aus Flachrohren (1) , Rohrböden (10) und Strömungspfaden (3) verlötet sind ; an den Deckeln (4.2) befinden sich die Ein - und Auslässe (5, 6) für die Flüssigkeit, **dadurch gekennzeichnet**, daβ
die Deckel (4.2) mit den Seitenteilen (4.1) und mit den Rohrböden (10) verschweißt sind und
die Sammelkästen (2) mit den Rohrböden (10) mechanisch verbunden sind.

2. Wärmeübertrager nach Anspruch 1, **dadurch gekennzeichnet, dass** die Seitenteile (4.1) mit umgebogenen Längsrändern (11) versehen sind, die zur Schweißverbindung mit den zugeordneten Seiten der Deckel (4.2) ausgebildet sind.

3. Wärmeübertrager nach den Ansprüchen 1 und 2, **dadurch gekennzeichnet, dass** die Seitenteile (4.1) den zugeordneten Rand der Rohrböden (10) einfassen und an den gegenüber liegenden Seiten des Blocks angeordnet sind, zu denen die Breitseiten (1a) der Flachrohre (1) weisen.

4. Wärmeübertrager nach Anspruch 1, **dadurch gekennzeichnet, dass** die Deckel (4.2) an den gegenüber liegenden Seiten des Blocks vorgesehen sind, zu denen die Schmalseiten (1b) der Flachrohre (1) weisen.

5. Wärmeübertrager nach Anspruch 1 und 4, **dadurch gekennzeichnet, dass** die Deckel (4.2) im wesentlichen über die gesamte Breite ausgewölbt sind und Ein - und Auslässe (5, 6) an der Wölbung (14) angeordnet sind.

6. Wärmeübertrager nach einem der vorstehenden Ansprüche, **dadurch gekennzeichnet, dass** die Deckel (4.2) zur Schweißverbindung mit den Rohrböden (10) abgekröpft sind.

7. Wärmeübertrager nach einem der vorstehenden Ansprüche, **dadurch gekennzeichnet, dass** die Deckel (4.2) zur Schweißverbindung mit den Seitenteilen (4.1) an den umgebogenen Rändern (11) der Seitenteile (4.1) anliegen.

8. Wärmeübertrager nach einem der vorstehenden Ansprüche, **dadurch gekennzeichnet, dass** die Deckel (4.2) wenigstens eine Strömungsumlenkung (20) aufweisen, und dass Einsätze (21) in den Strömungspfaden (3) vorgesehen sind, die eine damit korrespondierende Strömungstrennung (22) besitzen, sodass die Flüssigkeit den Wärmeübertrager mäanderartig durchströmt.

9. Wärmeübertrager nach Anspruch 8, **dadurch gekennzeichnet, dass** die Einsätze (21) ein wellenförmig verformtes Blech sind, dessen Wellungen in Längsrichtung der Flachrohre (1) laufen.

10. Wärmeübertrager nach Anspruch 8, **dadurch gekennzeichnet, dass** die Einsätze (21) aus jeweils zwei Blechen (23, 24) bestehen, die auf Höhe der Strömungsumlenkung (22) eine linienartige Verbindung (25) aufweisen.

11. Wärmeübertrager nach einem der vorstehenden Ansprüche, **dadurch gekennzeichnet, dass** zwei oder mehr Reihen von Flachrohren (1) zur Bildung des Blocks vorgesehen sind und dass in den Flachrohren (1) jeweils ein Inneneinsatz (30) angeordnet ist.

12. Verfahren zur Herstellung von mittels Flüssigkeit beaufschlagte Ladeluftkühler , gemäß wenigstens einem der Ansprüche 1 - 11, **dadurch gekennzeichnet,**
**dass** zunächst der Block aus Flachrohren (1) mit Inneneinsätzen (30), Rohrböden (10), Seitenteilen (4.1) und in den Strömungspfaden (3) befindlichen Einsätzen (21) mittels CAB - Lötverfahren gelötet wird, dass danach Deckel (4.2) mittels Schweißverfahren mit den Rohrböden (10) und den Seitenteilen (4.1) des gelöteten Blocks dicht verbunden werden,
und **dass** schließlich Sammelkästen (2) mechanisch mit den Rohrböden (10) dicht verbunden werden.

13. Herstellungsverfahren nach Anspruch 12, **dadurch gekennzeichnet, dass** der Block mittels Sprühverfahren mit Flussmittel versehen wird,

## Claims

1. Heat exchanger, for example an intercooler for a motor vehicle, consisting of a plurality of flat tubes (1) that terminate in collecting chambers (2) and are intended for a gaseous medium, and of flow paths (3) for a liquid medium arranged between the flat tubes (1), and with a housing (4) surrounding the flat tubes (1) and the flow paths (3), and with corresponding inlets and outlets (5 - 8) for the liquid and for the gas, the housing (4) consisting of two side sections (4.1) and two covers (4.2), and being
the side sections (4.1), brazed to a block of flat tubes (1), tube bases (10) and flow paths (3), the inlets and outlets (5, 6) for the liquid being located on the covers (4.2), **characterised in that** the covers (4.2) are welded to the side sections (4.1) and to the tube bases (10) and
the collecting chambers (2) are joined mechanically to the tube bases (10).

2. Heat exchanger according to Claim 1, **characterised in that** the side sections (4.1) have bent over longitudinal edges (11) that are formed for the welded joint with the corresponding sides of the covers (4.2).

3. Heat exchanger according to Claims 1 and 2, **characterised in that** the side sections (4.1) surround the corresponding edge of the tube bases (10) and are arranged on the opposite sides of the block towards which the broad sides (1a) of the flat tubes (1) point.

4. Heat exchanger according to Claim 1, **characterised in that** the covers (4.2) are provided on the opposite sides of the block towards which the narrow sides (1b) of the flat tubes (1) point.

5. Heat exchanger according to Claims 1 and 4, **characterised in that** the covers (4.2) are essentially curved over their whole width and that inlets and outlets (5, 6) are arranged on the curve (14).

6. Heat exchanger according to one of the preceding claims, **characterised in that** the covers (4.2) are cropped for the welded joint with the tube bases (10).

7. Heat exchanger according to one of the preceding claims, **characterised in that** the covers (4.2) are in contact with the bent edges (11) of the side sections (4.1) for the welded joint with the side sections (4.1).

8. Heat exchanger according to one of the preceding claims, **characterised in that** the covers (4.2) have at least one flow deflector (20) and that inserts (21) are provided in the flow paths (3) that have a corresponding flow separation (22) so that the liquid has a meander-like flow through the heat exchanger.

9. Heat exchanger according to Claim 8, **characterised in that** the inserts (21) are a corrugated plate whose corrugations run in the longitudinal direction of the flat tubes (1).

10. Heat exchanger according to Claim 8, **characterised in that** the inserts (21) each consist of two plates (23, 24) that have a linear connection (25) at the level of the flow deflection (22).

11. Heat exchanger according to one of the preceding claims, **characterised in that** two or more rows of flat tubes (1) are provided to form the block and that an internal insert (30) is arranged inside the flat tubes (1).

12. Method for production of a liquid-cooled intercooler according to at least one of Claims 1 to 11, **characterised in that** first the block of flat tubes (1) is brazed with internal inserts (30), tube bases (10), side sections (4.1) and inserts (21) arranged in the flow paths (3) by means of CAB brazing methods, that then the cover (4.2) is welded air-tight to the tube bases (10) and the side sections (4.1) of the brazed block by means of welding methods, and that finally collecting chambers (2) are joined mechanically and air-tight to the tube bases (10).

13. Method of production according to Claim 12, **characterised in that** flux is applied to the block by means of spray methods.

## Revendications

1. Echangeur de chaleur, par exemple refroidisseur d'air d'admission pour un véhicule automobile, composé d'une pluralité de tubes plats (1), qui débouchent dans des caissons collecteurs (2) et qui sont conçus pour un fluide gazeux, et de chemins d'écoulement (3) disposés entre les tubes plats (1) pour un fluide liquide, et avec une enceinte (4) entourant les tubes plats (1) et les chemins d'écoulement (3), ainsi qu'avec des entrées et des sorties correspondantes (5-8) pour le liquide et pour le gaz, dans lequel l'enceinte (4) se compose de deux parties latérales (4.1) et de deux couvercles (4.2) et les parties latérales (4.1) sont brasées avec un bloc composé de tubes plats (1), de fonds à tubes (10) et de chemins d'écoulement (3), et les entrées et les sorties (5, 6) pour le liquide se trouvent sur les couvercles (4.2) **caractérisé en ce que** les couvercles (4.2) sont soudés aux parties latérales (4.1) et aux fonds à tubes (10), et les caissons collecteurs (2) sont assemblés mécaniquement aux fonds à tubes (10).

2. Echangeur de chaleur selon la revendication 1, **caractérisé en ce que** les parties latérales (4.1) sont munies de bords longitudinaux repliés (11), qui sont réalisés en vue de l'assemblage soudé avec les parties associées des couvercles (4.2).

3. Echangeur de chaleur selon les revendications 1 et 2, **caractérisé en ce que** les parties latérales (4.1) enveloppent le bord associé des fonds à tubes (10) et sont disposées sur les côtés opposés du bloc vers lesquels les côtés larges (1a) des tubes plats (1) sont tournés.

4. Echangeur de chaleur selon la revendication 1, **caractérisé en ce que** les couvercles (4.2) sont prévus sur les côtés opposés du bloc, vers lesquels les côtés étroits (1b) des tubes plats (1) sont tournés.

5. Echangeur de chaleur selon les revendications 1 et 4, **caractérisé en ce que** les couvercles (4.2) sont courbés essentiellement sur toute la largeur et les entrées et sorties (5, 6) sont disposées dans la courbure (14).

6. Echangeur de chaleur selon l'une quelconque des revendications précédentes, **caractérisé en ce que** les couvercles (4.2) sont coudés en vue de l'assemblage soudé avec les fonds à tubes (10).

7. Echangeur de chaleur selon l'une quelconque des revendications précédentes, **caractérisé en ce que** les couvercles (4.2) s'appliquent sur les bords repliés (11) des parties latérales (4.1) en vue de l'assemblage soudé avec les parties latérales (4.1).

8. Echangeur de chaleur selon l'une quelconque des revendications précédentes, **caractérisé en ce que** les couvercles (4.2) présentent au moins une déviation d'écoulement (20), et **en ce qu'**il est prévu des obstacles (21) dans les chemins d'écoulement (3), qui possèdent une séparation d'écoulement (22) correspondant à ceux-ci, de telle manière que le liquide parcoure l'échangeur de chaleur de façon sinueuse.

9. Echangeur de chaleur selon la revendication 8, **caractérisé en ce que** les obstacles (21) sont constitués par une tôle déformée de forme ondulée, dont les ondulations s'étendent dans la direction longitudinale des tubes plats (1).

10. Echangeur de chaleur selon la revendication 8, **caractérisé en ce que** les obstacles (21) sont chaque fois composés de deux tôles (23, 24), qui présentent un assemblage en forme de ligne (25) à hauteur de la déviation d'écoulement (22).

11. Echangeur de chaleur selon l'une quelconque des revendications précédentes, **caractérisé en ce qu'**il est prévu deux ou plusieurs rangées de tubes plats (1) pour former le bloc et **en ce qu'**un obstacle intérieur (30) est chaque fois disposé dans les tubes plats (1).

12. Procédé de fabrication de refroidisseurs d'air d'admission alimentés en liquide, selon au moins une des revendications 1 à 11, **caractérisé en ce que** l'on brase d'abord le bloc composé de tubes plats (1) avec des obstacles intérieurs (30), des fonds à tubes (10), des parties latérales (4.1) et des obstacles (21) se trouvant dans les chemins d'écoulement (3) au moyen d'un procédé de brasage CAB, on assemble ensuite des couvercles (4.2) de façon étanche par un procédé de soudage aux fonds à tubes (10) et aux parties latérales (4.1) du bloc brasé, et on assemble enfin mécaniquement de façon étanche des caissons collecteurs (2) aux fonds à tubes (10).

13. Procédé de fabrication selon la revendication 12, **caractérisé en ce que** l'on munit le bloc d'un agent liquide par un procédé de pulvérisation.
